# EUROPÄISCHE PATENTSCHRIFT

(11) **EP 2 957 886 B1**
(45) Veröffentlichungstag und Bekanntmachung des Hinweises auf die Patenterteilung: **12.10.2016**
(21) Anmeldenummer: 14172809.7
(22) Anmeldetag: 17.06.2014
(51) Int. Cl.: G01N 1/20, G01N 1/40, G01N 33/18, G01N 1/10, G01N 1/38, G01N 35/00

(54) **Einrichtung zur Exposition von Probenkörpern in einer Flüssigkeit**
Device for exposing test bodies in a liquid
Dispositif d'immersion d'échantillons dans un liquide

(43) Veröffentlichungstag der Anmeldung: 23.12.2015
(73) Patentinhaber: Helmholtz-Zentrum Geesthacht Zentrum für Material- und Küstenforschung GmbH, 21502 Geesthacht (DE)
(72) Erfinder: Petersen, Jördis, 21493 Schwarzenbek (DE); Pröfrock, Daniel, 21385 Amelinghausen (DE); Langhans, Volker, 23883 Hollenbek (DE); Prange, Andreas, 22159 Hamburg (DE)
(74) Vertreter: Uexküll & Stolberg

(56) Entgegenhaltungen:
- WO-A1-93/08258
- WO-A1-2013/132630
- US-B1- 6 296 764
- GUNOLD R ET AL: "Calibration of the Chemcatcher<(>R) passive sampler for monitoring selected polar and semi-polar pesticides in surface water", ENVIRONMENTAL POLLUTION, BARKING, GB, Bd. 155, Nr. 1, 1. September 2008 (2008-09-01), Seiten 52-60, XP022822282, ISSN: 0269-7491, DOI: 10.1016/J.ENVPOL.2007.10.037 [gefunden am 2008-02-20]

## Beschreibung

Die vorliegende Erfindung betrifft eine Einrichtung zur kontinuierlichen Exposition von Probenkörpern in einer Flüssigkeit entsprechend dem Anspruch 1.

Im Bereich der Umweltanalytik ist es seit vielen Jahren bekannt, sogenannte Passivsammler über einen längeren Zeitraum in dem Wasser eines Gewässers zu exponieren, sodass sich in den Passivsammlern bestimmte, für die Qualität des Wassers in dem Gewässer relevante organische und anorganische Schadstoffverbindungen akkumulieren. Anschließend kann die akkumulierte Menge der fraglichen Verbindungen extrahiert werden und eine zeitlich gemittelte Konzentration der gelösten Schadstoffe bestimmt werden, um so eine Aussage über die Verschmutzung des Gewässers zu machen. Derartige Passivsammler sind beispielsweise aus der GB 1 566 253 A bekannt. Darüber hinaus gibt es aber auch andere Passivsammler, wie beispielsweise der sogenannte Chemcatcher-Metal- oder der DGT-Sammler, die für die Akkumulation anorganischer Schadstoffe genutzt werden.

Derartige Passivsammler sind so aufgebaut, dass sie eine Sammelphase aufweisen, die eine hohe Affinität für die Zielanalyten besitzt, und diese Sammelphase ist meist durch eine Membran, die den aktiven Flächenabschnitt bildet, von der Wasserphase getrennt. Die übrige Oberfläche des Sammlers ist für die fraglichen Substanzen nicht passierbar.

Grundsätzlich ist es möglich, diese Passivsammler zur Exposition unmittelbar in dem Gewässer in speziellen Käfigen oder Halterungen anzuordnen und dort von dem Wasser umspülen zu lassen. Dies ist jedoch mit dem Problem verbunden, dass sich bei hinreichend langem Aufenthalt der Sammler in dem Gewässer Bewuchs oder andere Ablagerungen auf dem aktiven Flächenabschnitt bilden, was zu einer reduzierten Diffusion der fraglichen Substanzen ins Innere in die Sammelphase der Sammler führt. Wenn dann später die Gesamtmenge der sich im Sammler akkumulierten fraglichen Substanzen bestimmt wird, um damit auch die Belastung des Gewässers zu bestimmen, kommt es durch die Ablagerungen und den Bewuchs dazu, dass die Belastung unterschätzt wird.

Ein weiteres Problem bei einer derartigen direkten Anordnung der Passivsammler im Gewässer besteht darin, dass die Strömungsbedingungen an dem ebenen aktiven Flächenabschnitt unklar sind. Da es aber gerade von der Umströmung des aktiven Flächenabschnitts abhängt, wie groß die Diffusion der fraglichen Substanzen ins Innere der Passivsammler ist, ergibt sich aus dieser Unklarheit eine weitere Ungenauigkeit der Bestimmung der Belastung des Gewässers.

Daher ist es grundsätzlich wünschenswert, die Passivsammler so anzuordnen, dass zum einen definierte Strömungsbedingungen im Bereich des aktiven Flächenabschnitts herrschen und zum anderen verhindert wird, dass sich Ablagerungen und Bewuchs auf dem aktiven Flächenabschnitt bilden.

Die WO 93/08258 A1 beschreibt eine Einrichtung zur verbesserten Zelltrennung. Dabei umfasst diese Einrichtung einen zylindrischen Behälter, dessen erste und zweite Endfläche in der Längsrichtung jeweils mit einem ersten und zweiten Probenkörperhalter versehen sind, die einen Probenkörper in der Form einer ebenen Membran halten. Zwischen dem ersten und dem zweiten Probenkörper weist die Einrichtung ein rotierend angetriebenes Rührelement auf, das sich senkrecht zur Längsachse des zylindrischen Behälters erstreckt und magnetisch angetrieben wird.

Aus Gunold et al., Calibration of the Chemcatcher passive sampler for monitoring selected polar and semi-polar pesticides and surface water, Environmental Pollution 155 (2008) 52 - 60, ist nicht für die eigentliche Konzentrationsmessung im Gewässer, sondern zum Kalibrieren unter Laborbedingungen bereits eine Anordnung bekannt, bei der Passivsammler auf einem drehend angetriebenen Halter in einem offenen Behälter angeordnet werden, durch den mit organischen Substanzen belastetes Wasser mit einer vorgegebenen Strömungsgeschwindigkeit gefördert wird. Dieser Aufbau ist jedoch deswegen nachteilhaft, weil die Strömungsbedingungen an dem aktiven Flächenabschnitt der Passivsammler nach wie vor unklar sind.

Daher ist es ausgehend vom Stand der Technik die Aufgabe der vorliegenden Erfindung, eine Einrichtung zur Exposition von Probenkörpern, insbesondere Passivsammlern, in einer Flüssigkeit wie Wasser bereitzustellen, die über einen langen Zeitraum gleichbleibende Strömungsbedingungen im Bereich des aktiven Flächenabschnitts der Probenkörper bzw. Passivsammler sicherstellt.

Erfindungsgemäß wird diese Aufgabe dadurch gelöst, dass das Rührelement um die Längsachse rotiert und der erste Probenkörperhalter ausgestaltet ist, mehrere Probenkörper derart zu haltern, dass deren Mittelpunkte parallel zur ersten Probenebene einen einheitlichen Abstand (d) zur Längsachse haben, wobei das Rührelement mit einer Antriebswelle verbunden ist, die sich parallel zur Längsachse durch eine aus der ersten und der zweiten Endfläche erstreckt, und wobei das Rührelement sich radial von der Antriebswelle wegerstreckende Flügel aufweist.
In dem Probenkörperhalter können im Messbetrieb als sogenannte Passivsammler ausgebildete Probenkörper angeordnet sein, die ausgestaltet sind, dass sich in ihnen bestimmte, im Wasser als Verunreinigungen enthaltene Substanzen akkumulieren, wobei diese Substanzen durch einen aktiven Flächenabschnitt ins Innere des Probenkörpers diffundieren.

Des Weiteren stellt das Rührelement sicher, dass der Bereich über dem oder den aktiven Flächenabschnitt(en) kontinuierlich bewegt wird, sodass damit auch die Flüssigkeit kontinuierlich über die aktiven Flächenabschnitte hinweg bewegt wird. Damit sind gerade in dem relevanten Bereich die Strömungsverhältnisse klar definiert und reproduzierbar, in dem die Passivsammler so mit der Flüssigkeit oder dem Wasser wechselwirken, dass sie darin enthaltene Substanzen aufnehmen können.

Außerdem ist der Probenkörperhalter dann, wenn er mehrere Probenkörper aufnehmen kann, derart ausgestaltet, dass sich die durch die aktiven Flächenabschnitte definierten Messebenen der Probenkörper in einer gemeinsamen Probenebene erstrecken bzw. in dieser verlaufen. Dies hat den Vorteil, dass alle Probenkörper unter identischen Strömungsbedingungen angebracht sind. Schließlich kann durch eine gleichbleibende Rotationsgeschwindigkeit des Rührelements während des Messzeitraums erreicht werden, dass die Strömungsverhältnisse in diesem Bereich über den gesamten Messzeitraum, in dem die Passivsammler in dem Behälter angeordnet sind, gleichbleibend sind.

Bei der erfindungsgemäßen Einrichtung wird die Flüssigkeit bzw. das Wasser durch Rohrleitungen ins Innere des Behälters mit den Probenkörpern gepumpt und aus diesem auch wieder entnommen. Dadurch kann die Einrichtung entfernt von der eigentlichen Messstelle angebracht werden und muss mit der Messstelle nur über Rohrleitungen verbunden werden. Dies ermöglicht einen sehr flexiblen Einsatz, und es ist möglich, die Einrichtung auch auf einem Schiff oder dgl. einzusetzen. Dadurch, dass der Behälter durch die Endfläche verschlossen ist, wird außerdem ermöglicht, die Flüssigkeit bzw. das Wasser unter Druck durch den Behälter zu pumpen und so die Strömungsgeschwindigkeit über einen größeren Bereich zu variieren als dies bei einem offenen Behälter der Fall wäre.

Erfindungsgemäß rotiert das Rührelement um die Längsachse, und der erste Probenkörperhalter ist ausgestaltet, mehrere Probenkörper derart zu haltern, dass deren Mittelpunkte parallel zur ersten Probenebene einen einheitlichen Abstand zur Längsachse haben. Damit sind die Probenkörper auf einem Kreis um die Längsachse angeordnet, und bei vorgegebener Rotationsgeschwindigkeit des Rührelements kann die Strömungsgeschwindigkeit am Ort der Probenkörper in einfacher Weise berechnet werden. Außerdem ist diese Strömungsgeschwindigkeit für alle Probenkörper identisch, sodass diese auch unter identischen Bedingungen exponiert werden.

Vorzugsweise ist in dem Behälter ein zweiter Probenkörperhalter vorgesehen, der sich ebenfalls quer zur Längsachse erstreckt und ausgestaltet ist, ebenfalls wenigstens einen Probenkörper derart zu haltern, dass sich dessen Messebene senkrecht zur Längsachse in einer zweiten Probenebene erstreckt, und dass der aktive Flächenabschnitt von der zweiten Endfläche weg weist, wobei das Rührelement zwischen dem ersten und dem zweiten Probenkörperhalter angeordnet ist. Ist der zweite Probenkörperhalter ausgestaltet, mehrere Probenkörper oder Passivsammler aufzunehmen, ist auch er so aufgebaut, dass sich die Messebenen in einer gemeinsamen zweiten Probenebene erstrecken bzw. in dieser verlaufen.

Damit sind dann der erste und der zweite Probenkörperhalter so angeordnet, dass die darin angeordneten Probenkörper bzw. Passivsammler mit ihren aktiven Flächenabschnitten zueinander weisen und einander gegenüberliegend angeordnet sind. Zwischen diesen Probenkörpern ist dann das Rührelement angeordnet, das die Flüssigkeit bzw. das Wasser kontinuierlich über die in beiden Probenkörperhaltern angeordneten Probenkörper hinweg bewegt. Eine solche Anordnung ermöglicht, eine größere Anzahl von Probenkörpern gleichzeitig unter klar definierten Bedingungen im Wasser zu exponieren. Insbesondere kann auch der zweite Probenhalter derart ausgestaltet sein, dass er mehrere Probenkörper derart haltern kann, dass deren Mittelpunkte parallel zur zweiten Probenebene einen einheitlichen Abstand zur Längsachse haben. Damit kann auch für die Probenkörper im zweiten Probenhalter die Strömungsgeschwindigkeit berechnet werden, und diese ist einheitlich für alle im zweiten Probenhalter gehalterten Probenkörper.

Weiterhin ist es bevorzugt, wenn in einer aus der ersten und der zweiten Endfläche der Einlass und in der anderen aus der ersten und der zweiten Endfläche der Auslass vorgesehen ist. Bei einem derartigen Aufbau wird durch die Anordnung des Einlasses und des Auslasses in gegenüberliegenden Endflächen sichergestellt, dass der Behälter, in dem der oder die als Passivsammler ausgebildeten Probenkörper angeordnet sind, in axialer Richtung kontinuierlich durchströmt wird, ohne dass sich darin Totzonen bilden können, in denen sich Wasser staut und nicht kontinuierlich ausgetauscht wird.

Erfindungsgemäß ist das Rührelement derart ausgestaltet, dass es mit einer Antriebswelle verbunden ist, die sich parallel zur Längsachse durch eine aus der ersten und der zweiten Endfläche erstreckt, wobei das Rührelement zusätzlich radial von der Antriebswelle sich weg erstreckende Flügel aufweist. Ein solcher Aufbau ermöglicht einen einfachen Antrieb des von außen ansteuerbaren Rührelements, und es ist nicht notwendig, im Inneren des Behälters einen in aufwändiger Weise gekapselten Antrieb vorsehen zu müssen.

Vorzugsweise können dabei die Flügel lösbar an der Antriebswelle gehaltert sein. Dies ist deswegen vorteilhaft, weil dann der Zugriff auf die in dem Probenkörperhalter aufgenommenen Probenkörper erleichtert wird, wenn die Flügel von der Antriebswelle abgenommen sind.

Weiterhin ist es bevorzugt, wenn die erste Endfläche lösbar mit der Seitenwandung verbunden ist, wobei sich die Antriebswelle durch die zweite Endfläche erstreckt und der erste Probenkörperhalter lösbar an der Seitenwandung gehaltert ist. Bei einem solchen Aufbau kann zum Wechseln der Probenkörper in der Weise vorgegangen werden, dass zunächst die erste Endfläche von der Seitenwandung gelöst wird und dann der benachbart zu der ersten Endfläche angeordnete erste Probenkörperhalter aus dem Behälter entnommen wird. Dann können die daran angebrachten Probenkörper bzw. Passivsammler vom Probenkörperhalter gelöst und ausgetauscht werden. Nach Entnahme des ersten Probekörperhalters liegt das Rührelement frei und kann, da es lösbar an der Antriebswelle angebracht ist, ebenfalls aus dem Behälter entnommen werden. Nun liegt auch der zweite Probenkörperhalter frei, sodass die daran gehalterten Probenkörper bzw. Passivsammler getauscht werden können. Damit ermöglicht dieser Aufbau einen einfachen Austausch der Passivsammler bzw. Probenkörper. Besonders bevorzugt ist es, wenn auch der zweite Probenkörperhalter lösbar an der Seitenwandung gehaltert ist, da dann kein Austausch der Probenkörper am zweiten Probenkörperhalter innerhalb des Behälters erforderlich ist, sondern dieser Austausch auch außerhalb des Behälters erfolgen kann.

Schließlich können in einer weiteren bevorzugten Ausführungsform der Auslass oder der Einlass mit einer Durchflussmesseinrichtung verbunden sein, sodass die Strömungsgeschwindigkeit durch den Behälter kontinuierlich erfasst werden kann. Außerdem lässt dies zu, die gesamte, während einer Messung durch den Behälter geflossene Wassermenge zu bestimmen.

Weiterhin ist es bevorzugt, wenn der Behälter senkrecht zur Längsachse einen kreisförmigen Querschnitt aufweist und die Endflächen sich senkrecht zur Längsachse erstrecken. Ein solcher kreissymmetrischer Aufbau hat den Vorteil, dass es dann aufgrund des rotierenden Rührelements kaum Totzonen in dem Behälter gibt und ein kontinuierlicher Austausch der Flüssigkeit bzw. des Wassers darin stattfindet.

Im Folgenden wird die vorliegende Erfindung anhand einer lediglich ein bevorzugtes Ausführungsbeispiel zeigenden Zeichnung erläutert, wobei
- Fig. 1: eine perspektivische Schnittdarstellung des Ausführungsbeispiels ist,

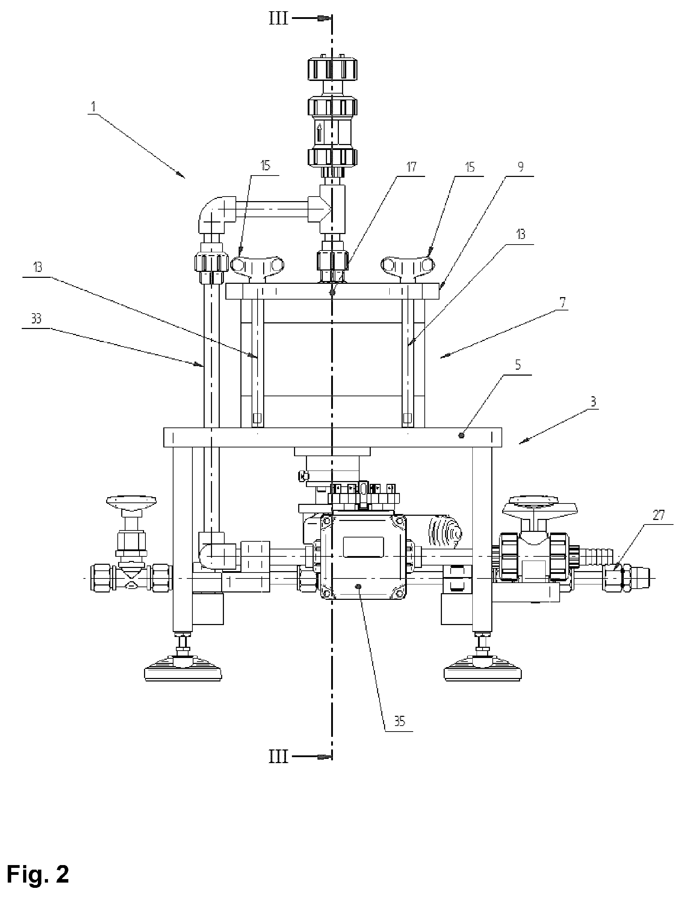

- Fig. 2: eine Seitenansicht des in Fig. 1 dargestellten Ausführungsbeispiels ist,
- Fig. 3: ein Schnitt entlang der Linie III-III aus Fig. 2 ist,
- Fig. 4: ein vergrößerter Ausschnitt der Schnittdarstellung aus Fig. 3 ist und
- Fig. 5: eine Draufsicht auf einen Probenkörperhalter des Ausführungsbeispiels aus Fig. 1 ist.

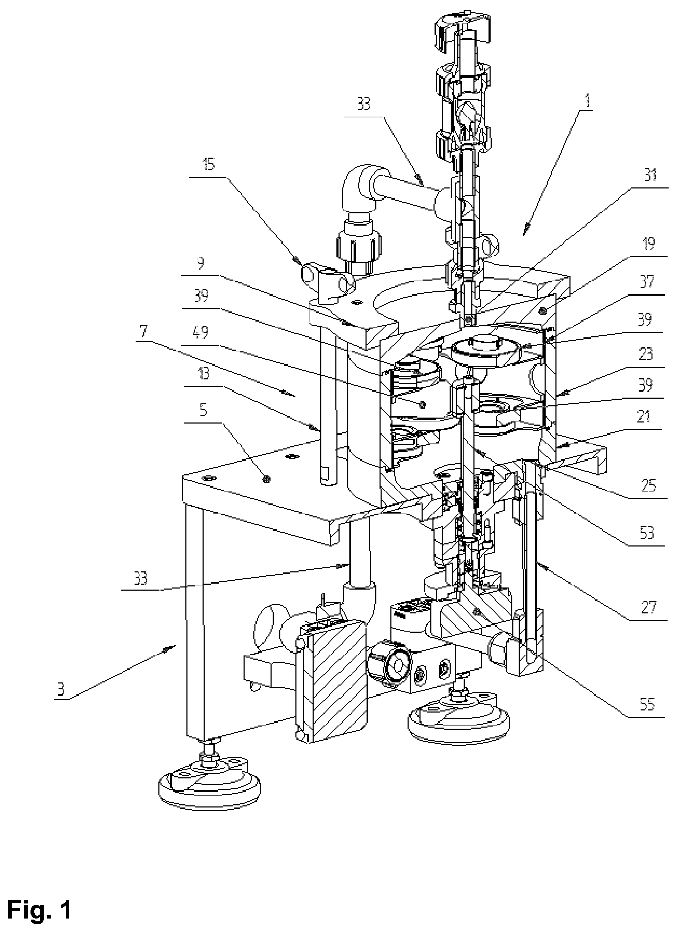

Wie aus Fig. 1 zu erkennen ist, ist das Ausführungsbeispiel einer erfindungsgemäßen Einrichtung 1 zur Exposition von Probenkörpern in einer Flüssigkeit wie Wasser auf einem Tisch 3 abgestützt, der eine sich horizontal erstreckende Platte 5 aufweist und der vorzugsweise aus Kunststoff ausgebildet ist.

Die Einrichtung 1 umfasst einen geschlossenen Behälter 7, der zwischen einem oberen Klemmring 9 und der Tischplatte 5 angeordnet ist. Zwischen dem Klemmring 9 und der Tischplatte 5 erstrecken sich Gewindestangen 13, sodass der obere Klemmring 9 hin zu der Tischplatte 5 mit Hilfe von Spannmuttern 15 gespannt werden kann.

Der Behälter 7 ist in der Weise aufgebaut, dass er sich entlang einer Längsachse 17 erstreckt und senkrecht zu der Längsachse 17 einen kreisförmigen Querschnitt aufweist. Der Behälter 7 weist eine erste obere Endfläche 19 sowie eine zweite untere Endfläche 21 auf, zwischen denen eine sich parallel zur Längsachse 17 erstreckende geschlossene Seitenwandung 23 vorgesehen ist. Die Endflächen 19, 21 sowie die Seitenwandung 23 sind in dem hier beschriebenen bevorzugten Ausführungsbeispiel aus Polypropylen ausgebildet.

Die erste Endfläche 19, die Seitenwandung 23 und die zweite Endfläche 21 sind lösbar miteinander verbunden, wobei zwischen der ersten Endfläche 19 und der Seitenwandung 23 sowie zwischen der Seitenwandung 23 und der zweiten Endfläche 21 jeweils umlaufende Dichtungen angeordnet sind. Die Endflächen 19, 21 sowie die Seitenwandung 23 werden durch den über die Spannmuttern 15 gegen die Tischplatte 5 gespannten Klemmring 9 gegeneinander gedrückt, sodass der Behälter 7 im Bereich der Trennflächen zwischen den Endflächen 19, 21 und der Seitenwandung 23 abgedichtet ist. Damit ist das Volumen im Inneren des Behälters 7 von der Umgebung abgeschlossen.

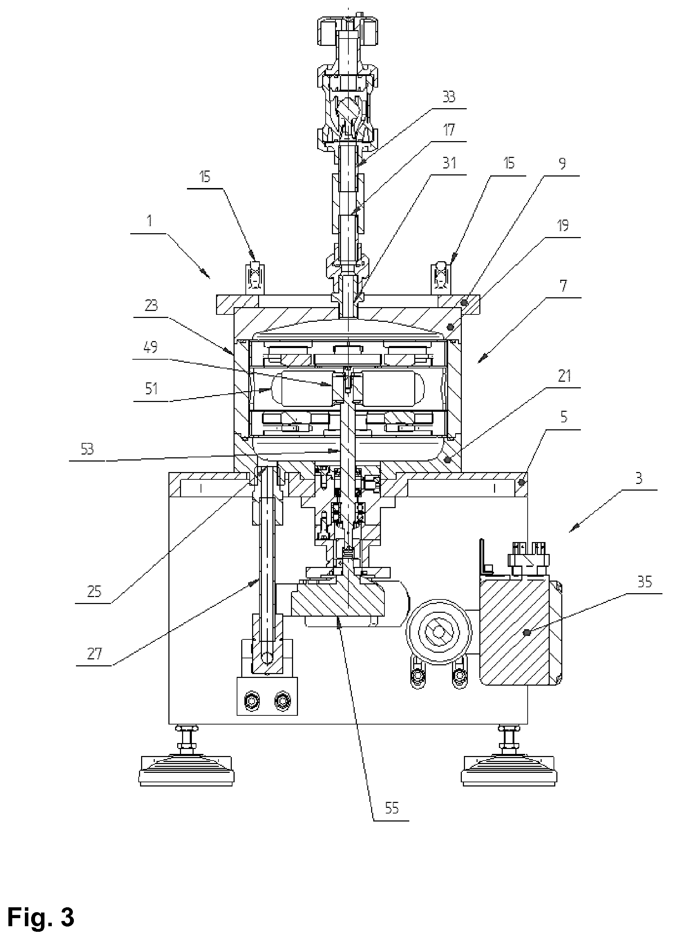

Wie weiter aus den Figuren 1, 3 und 4 zu erkennen ist, ist in der zweiten unteren Endfläche 21 radial versetzt zur Längsachse 17 ein Einlass 25 vorgesehen, durch den Wasser ins Innere des Behälters 7 einströmen kann, wobei der Einlass 25 über eine Rohrleitung 27, die in bevorzugter Weise aus Perfluoralkoxylalkan (PFA) hergestellt ist, mit einer nicht dargestellten Versorgungspumpe, die einen konstanten Volumenstrom sicherstellt, verbunden ist. In der oberen ersten Endfläche 19 ist zentral ein Auslass 31 vorgesehen, der über eine Rohrleitung 33, die aus Polyvinylidenfluorid (PVDF) hergestellt ist, mit einer als Durchflusssensoranordnung 35 ausgebildeten Durchflussmesseinrichtung verbunden ist, mit der der Volumenstrom durch die Rohrleitung 33 gemessen werden kann. Außerdem kann mittels der Durchflusssensoranordnung 35 die Gesamtmenge des Wassers bestimmt werden, das in einem bestimmten Zeitraum durch den Behälter 7 geströmt ist.

Im Inneren des Behälters 7 ist ein erster Probenkörperhalter 37 angeordnet, wobei dieser benachbart zu der ersten Endfläche 19 vorgesehen und lösbar an der Seitenwandung 23 gehaltert ist. Der Probenkörperhalter 37 ist aus Titan (Gr. 1; Werkstoff-Nr. 3.7025) gefertigt und nimmt im Messbetrieb Probenkörper 39 auf, die ausgestaltet sind, dass sich in ihnen bestimmte, im Wasser als Verunreinigungen enthaltene Substanzen akkumulieren, wobei diese Substanzen durch einen aktiven Flächenabschnitt 40 ins Innere des Probenkörpers 39 diffundieren können, in der eine Sammelphase enthalten ist, die eine hohe Affinität für die fraglichen Substanzen hat. Derartige sogenannte Passivsammler sind hinlänglich aus dem Stand der Technik beispielsweise als Chemcatcher-Metal- oder DGT-Sammler bekannt.

Dabei definiert der aktive Flächenabschnitt 40 des Probenkörpers 39 eine Messebene 41. Wenn der aktive Flächenabschnitt 40 als eine ebene Membran ausgebildet ist, fallen der aktive Flächenabschnitt 40 und die Messebene 41 zusammen. Es ist aber auch denkbar, dass der aktive Flächenabschnitt 40 einen gekrümmten Verlauf hat. Dann wird die Messebene 41 durch eine Tangentialebene definiert, die am Mittelpunkt des aktiven Flächenabschnitts 40 anliegt.

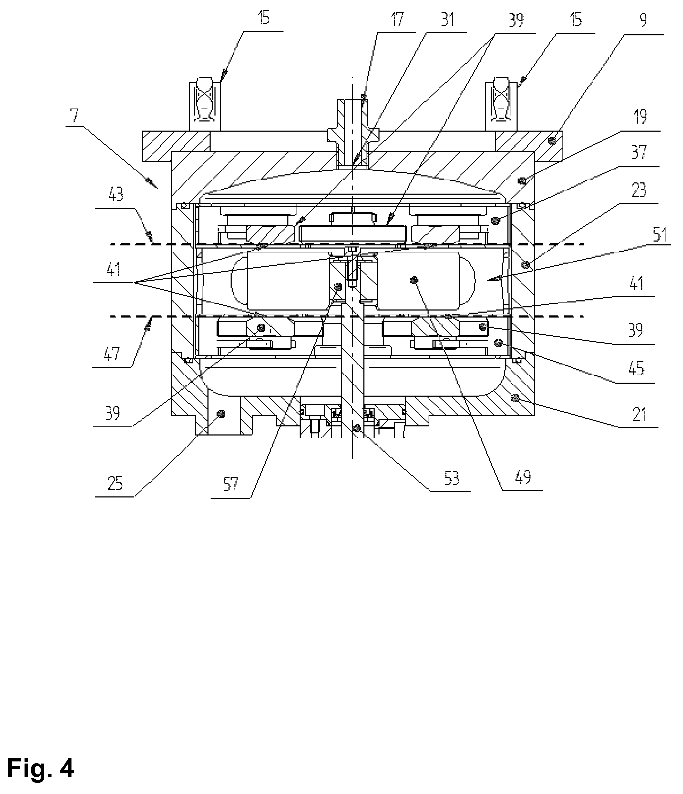

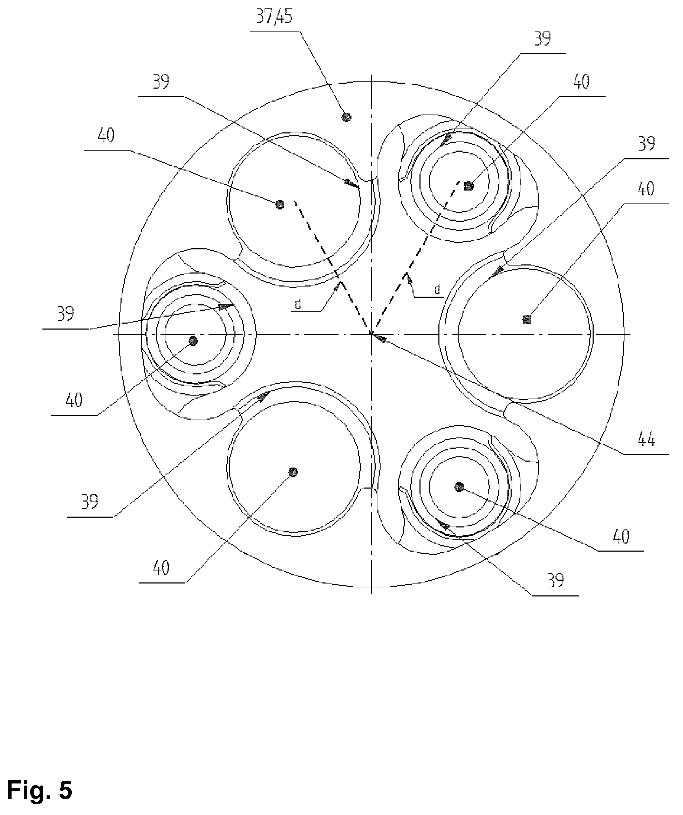

Wie weiterhin aus Fig. 5 zu erkennen ist, können Probenkörper 39 unterschiedlichen Typs in dem ersten Probenkörperhalter 37 angebracht sein, wobei die Probenkörper 39 lösbar in entsprechenden Klemmvorrichtungen in dem Probenkörperhalter 37 befestigt sind. Die aktiven Flächenabschnitte 40 der Probenkörper 39 weisen in eine gemeinsame Richtung, und der erste Probenkörperhalter 37 ist derart ausgestaltet, dass er die Probenkörper 39 so lösbar haltern kann, dass sich deren Messebenen 41 in einer gemeinsamen ersten Probenebene 43 erstrecken (siehe Fig. 4). Außerdem ist der erste Probenkörperhalter 37 so ausgestaltet, dass die Probenkörper 39 so darin gehaltert sind, dass deren Mittelpunkte den gleichen einheitlichen Abstand d vom Mittelpunkt 44 des ersten Probenkörperhalters 37 haben. Die Probenkörper 39 sind also auf einem Kreis um den Mittelpunkt 44 herum angeordnet.

Wenn der erste Probenkörperhalter 37 in dem Behälter 7 angebracht ist, weisen die aktiven Flächenabschnitte 40 von der ersten Endfläche 19 weg, und der Mittelpunkt 44 des ersten Probenkörperhalters 37 fällt mit der Längsachse 17 zusammen. Damit weisen die aktiven Flächenabschnitte 40 von der ersten Endfläche 19 weg hin zu einer Mittelebene des Behälters 7, die senkrecht zu der Längsachse 17 verläuft, und sind auf einem Kreis um die Längsachse 17 angeordnet. Damit haben die Mittelpunkte der Probenkörper 39 einen einheitlichen Abstand zur Längsachse 17.

Außerdem ist in dem Behälter 7 ein zweiter Probenkörperhalter 45 vorgesehen, der auch lösbar an der Seitenwandung 23 gehaltert und benachbart zu der zweiten unteren Endfläche 21 angeordnet ist. Der zweite Probenkörperhalter 45 ist ebenfalls aus Titan (Gr. 1; Werkstoff-Nr. 3.7025) hergestellt und so ausgestaltet, dass er die schon beschriebenen Probenkörper 39 derart lösbar haltern kann, dass sich deren Messebenen 41 in einer zweiten Probenebene 47 erstrecken und die aktiven Flächenabschnitte 40 weg von der zweiten Endfläche 21 und hin zu der ersten Endfläche 19 und damit hin zu der ersten Probenebene 43 weisen. Damit sind die Probenkörper 39 in den Probenkörperhaltern 37, 45 derart angeordnet, dass sich deren aktive Flächenabschnitte 40 gegenüberliegen. Im Übrigen ist der zweite Probenkörperhalter 45 wie der erste ausgebildet, sodass die Probenkörper 39 auch hier einen identischen Abstand vom Mittelpunkt 44 haben und der Mittelpunkt 44 mit der Längsachse 17 zusammenfällt, wenn der zweite Probenkörperhalter 45 im Behälter 7 montiert ist.

Zwischen den Probenebenen 43, 47 ist ein sich radial von der Längsachse 17 weg erstreckendes, Flügel 49 aufweisendes Rührelement 51 vorgesehen, das aus Titan (Gr. 1; Werkstoff-Nr. 3.7025) hergestellt ist, wobei die Flügel 49 lösbar an einer sich entlang der Längsachse 17 erstreckenden Antriebswelle 53 angebracht sind, die sich durch die zweite untere Endfläche 21 hin zu einem Antriebsmotor 55 erstreckt und die aus Titan (Gr. 2; Werkstoff-Nr. 3.7035) gefertigt ist. Die nicht dargestellte Dichtung zwischen der zweiten unteren Endfläche 21 und der Antriebswelle 53 ist als eine PTFE-Wellendichtung ausgebildet.

Die Flügel 49 sind eben ausgebildet und erstrecken sich im Wesentlichen parallel zur Längsachse 17. Außerdem sind die Flügel 49 an einer Nabe 57 befestigt, die wiederum auf die Antriebswelle 53 aufgeschraubt ist, sodass durch Lösen der Nabe 57 das die Flügel 49 aufweisende Rührelement 51 von der Antriebswelle 53 gelöst werden kann.

Die zuvor beschriebene Einrichtung kann nun wie folgt betrieben werden, um die Probenkörper 39 kontinuierlich in einer Flüssigkeit, d. h. in Wasser aus einem Gewässer, zu exponieren. Dabei stellt die Wahl der Materialien für die Elemente, die mit dem zu analysierenden Wasser in Kontakt kommen, sicher, eine Kontamination durch Spurenelemente möglichst vollständig zu eliminieren, und es wird dadurch eine Anwendung in Salzwasser ermöglicht.

Dazu wird das Wasser durch den Einlass 25 ins Innere des Behälters 7 gepumpt und verlässt den Behälter 7 durch den Auslass 31 und die Rohrleitung 33. Dies sorgt für eine Bewegung des Wassers durch den Behälter 7 im Wesentlichen parallel zu der Längsachse 17. Mittels des Durchflusssensors 35 wird erfasst, mit welchem Volumenstrom das Wasser durch den Behälter 7 strömt. Außerdem kann die Gesamtmenge an Wasser gemessen werden, die in einem bestimmten Zeitraum durch den Behälter gepumpt wird.

Gleichzeitig rotiert das Rührelement 51 mit den Flügeln 49, sodass das Wasser über die aktiven Flächenabschnitte 40 der Probenkörper 39 bzw. Passivsammler hinweg kontinuierlich bewegt wird. Dies stellt eine kontinuierliche Verwirbelung und eine Umströmung der aktiven Flächenabschnitte 40 sicher und verhindert weiterhin, dass sich Schwebteilchen auf den aktiven Flächenabschnitten 40 ablagern oder sich dort Bewuchs bildet, was beides die Diffusion der von den Probenkörpern 39 zu absorbierenden Substanzen durch die aktiven Flächenabschnitte 40 behindern würde. Durch die gleichmäßige Rotation des Rührelements 51 durch den Antriebsmotor 55 wird ferner erreicht, dass die Strömungsbedingungen im Bereich der aktiven Flächenabschnitte 40 zeitlich auch über lange Zeiträume konstant bleiben. Somit sind die Bedingungen, unter denen die Probenkörper 39 dem fraglichen Wasser ausgesetzt sind, reproduzierbar und zeitlich konstant.

Dadurch, dass die Probenkörper 39 bzw. Passivsammler in den Probenkörperhaltern 37, 45 auf einem Kreis um den Mittelpunkt 44 angeordnet sind und aufgrund der Anordnung im Behälter 7 dieser Kreis konzentrisch zu der Längsachse 17 ist, um die das Rührelement 51 rotiert, ergibt sich die Strömungsgeschwindigkeit an den aktiven Flächenabschnitten 40 in einfacher Weise aus der Rotationsgeschwindigkeit des Rührelements 51 und dem Abstand d der Probenköper 39 vom Mittelpunkt 44.

Um nach einem Messzeitraum die Probenkörper 39 für eine Analyse aus der Einrichtung 1 zu entnehmen und gegen andere Probenkörper 39 auszutauschen, müssen zunächst die Spannmuttern 15 gelöst werden, und der Klemmring 9 muss abgenommen werden. Anschließend können nach einem vorherigen Entleeren des Behälters 7 die erste Endfläche 19 abgenommen und der erste Probenkörperhalter 37 aus dem Behälter 7 entnommen werden. Dann liegt das Rührelement 51 frei, und durch Lösen der Nabe 57 von der Antriebswelle 53 kann auch dieses aus dem Behälter 7 entnommen werden. Anschließend besteht Zugriff auf den zweiten Probenkörperhalter 45 benachbart zu der zweiten unteren Endfläche 21, und auch die daran gehalterten Probenkörper 39 sind zugänglich, wobei ein Austausch aufgrund der lösbaren Halterung auch des zweiten Probenkörperhalters 45 gegebenenfalls außerhalb des Behälters 7 bzw. der Seitenwandung 23 erfolgen kann.

Die Seitenwandung 23 und die erste Endfläche 21 können ebenfalls voneinander getrennt werden, sofern dies zu Reinigungszwecken erforderlich ist.

Damit kann die Einrichtung auch in einfacher Weise demontiert werden, und ein Austausch der Probenkörper 39 ist in einfacher Weise möglich.

## Patentansprüche

1. Einrichtung zur kontinuierlichen Exposition von Probenkörpern (39) in einer Flüssigkeit, die einen aktiven Flächenabschnitt (40) aufweisen, durch den eine Messebene (41) definiert wird,
mit einem Behälter (7), der sich entlang einer Längsachse (17) erstreckt, eine sich entlang der Längsachse (17) erstreckende geschlossene Seitenwandung (23) aufweist und eine erste und eine zweite sich quer zur Längsachse erstreckende Endfläche (19, 21) hat,
mit einem ersten Probenkörperhalter (37), der sich quer zur Längsachse (17) erstreckt und ausgestaltet ist, wenigstens einen Probenkörper (39) derart zu haltern, dass sich dessen Messebene (41) senkrecht zur Längsachse (17) in einer ersten Probenebene (43) erstreckt und dass der aktive Flächenabschnitt (40) von der ersten Endfläche (19) weg weist, wobei der erste Probenkörperhalter (37) weiter ausgestaltet ist, mehrere Probenkörper (39) derart zu haltern, dass deren Mittelpunkte parallel zur ersten Probenebene (43) einen einheitlichen Abstand (d) zur Längsachse (17) haben, und
mit einem in einer Ebene senkrecht zur Längsachse (17) rotierend angetriebenem Rührelement (51), das auf der von der ersten Endfläche (19) weg weisenden Seite der ersten Probenebene (43) angeordnet ist,
wobei der Behälter (7) einen Einlass (25) und einen Auslass (31) aufweist,
**dadurch gekennzeichnet,**
**dass** das Rührelement (51) um die Längsachse (17) rotiert und mit einer Antriebswelle (53) verbunden ist, die sich parallel zur Längsachse (17) durch eine aus der ersten und der zweiten Endfläche (19, 21) erstreckt, und wobei das Rührelement (51) sich radial von der Antriebswelle (53) wegerstreckende Flügel (49) aufweist.

2. Einrichtung nach Anspruch 1, wobei ein zweiter Probenkörperhalter (45) vorgesehen ist, der sich quer zur Längsachse (17) erstreckt und ausgestaltet ist, wenigstens einen Probenkörper (39) derart zu haltern, dass sich dessen Messebene (41) senkrecht zur Längsachse (17) in einer zweiten Probenebene (47) erstreckt und dass der aktive Flächenabschnitt (40) von der zweiten Endfläche (21) weg weist, und
wobei das Rührelement (51) zwischen dem ersten und dem zweiten Probenkörperhalter (37, 45) angeordnet ist.

3. Einrichtung nach Anspruch 2, wobei der zweite Probenkörperhalter (45) ausgestaltet ist, mehrere Probenkörper (39) derart zu haltern, dass deren Mittelpunkte parallel zur zweiten Probenebene (47) einen einheitlichen Abstand (d) zur Längsachse (17) haben.

4. Einrichtung nach einem der Ansprüche 1 bis 3, wobei in einer aus der ersten und der zweiten Endfläche (19, 21) der Einlass (25) und in der anderen aus der ersten und der zweiten Endfläche (19, 21) der Auslass (31) vorgesehen ist.

5. Einrichtung nach Anspruch 1, wobei die Flügel (49) lösbar an der Antriebswelle (53) gehaltert sind.

6. Einrichtung nach Anspruch 1 oder 5, wobei die erste Endfläche (19) lösbar mit der Seitenwandung (23) verbunden ist,
wobei sich die Antriebswelle (53) durch die zweite Endfläche (21) erstreckt und
wobei der erste Probenkörperhalter (45) lösbar an der Seitenwandung (23) gehaltert ist.

7. Einrichtung nach Anspruch 5 und 6, wobei der zweite Probenkörperhalter (45) lösbar an der Seitenwandung (23) gehaltert ist.

8. Einrichtung nach einem der Ansprüche 1 bis 7, wobei der Einlass oder der Auslass (31) mit einer Durchflussmesseinrichtung (35) verbunden sind.

9. Einrichtung nach einem der Ansprüche 1 bis 8, wobei der Behälter (7) senkrecht zur Längsachse (17) einen kreisförmigen Querschnitt aufweist und
wobei sich die Endflächen (19, 21) senkrecht zur Längsachse (17) erstrecken.

## Claims

1. A device for the continuous exposure of sample bodies (39) in a fluid, which sample bodies include an active surface section (40), which defines a measuring plane (41),
having a container (7), which extends along a longitudinal axis (17), includes a closed side wall (23) extending along the longitudinal axis (17) and has a first and a second end face (19, 21) extending transverse to the longitudinal axis,
having a first sample body holder (37), which extends transverse to the longitudinal axis (17) and which is designed to hold at least one sample body (39) in such a way that its measuring plane (41) extends perpendicular to the longitudinal axis (17) in a first sample plane (43), and such that the active surface section (40) is facing away from the first end face (19), whereby the first sample body holder (37) is further designed to hold several sample bodies (39) in such a way that their center points parallel to the first sample plane (43) have a uniform distance (d) to the longitudinal axis (17), and
having an agitating element (51) driven in a rotating manner in a plane perpendicular to the longitudinal axis (17), which is arranged on the side facing away from the first end face (19) of the first sample plane (43),
whereby the container (7) includes an inlet (25) and an outlet (31),
**characterized in**
**that** the agitating element (51) rotates around the longitudinal axis (17) and is connected to a drive shaft (53) which extends parallel to the longitudinal axis (17) through one of the first and the second end faces (19, 21), and whereby the agitating element (51) includes blades (49) extending radially outwards from the drive shaft (53).

2. A device according to Claim 1, whereby a second sample body holder (45) is provided, which extends transverse to the longitudinal axis (17) and which is designed to hold at least one sample body (39) in such a way that its measuring plane (41) extends perpendicular to the longitudinal axis (17) in a second sample plane (47), and such that the active surface section (40) is facing away from the second end face (21), and
whereby the agitating element (51) is arranged between the first and the second sample body holders (37, 45).

3. A device according to Claim 2, whereby the second sample body holder (45) is designed to hold several sample bodies (39) in such a way that their center points parallel to the second sample plane (47) have a uniform distance (d) to the longitudinal axis (17).

4. A device according to any one of Claims 1 to 3, whereby in one of the first and the second end faces (19, 21) the inlet (25) is provided and in the other of the first and the second end faces (19, 21) the outlet (31) is provided.

5. A device according to Claim 1, whereby the blades (49) are detachably held on the drive shaft (53).

6. A device according to Claim 1 or 5, whereby the first end face (19) is detachably connected to the side wall (23),
whereby the drive shaft (53) extends through the second end face (21) and
whereby the first sample body holder (45) is detachably held on the side wall (23).

7. A device according to Claims 5 and 6, whereby the second sample body holder (45) is detachably held on the side wall (23).

8. A device according to any one of Claims 1 to 7, whereby the inlet or the outlet (31) are connected to a flow measuring device (35).

9. A device according to any one of Claims 1 to 8, whereby the container (7) has a circular cross section perpendicular to the longitudinal axis (17) and
whereby the end faces (19, 21) extend perpendicular to the longitudinal axis (17).

## Revendications

1. Dispositif pour l'exposition continue d'échantillons (39) dans un liquide, lesquels présentent une portion de surface active (40) qui définit un plan de mesure (41), comprenant un récipient (7) qui s'étend le long d'un axe longitudinal (17), qui présente une paroi latérale (23) fermée s'étendant le long de l'axe longitudinal (17) et qui possède une première et une deuxième surface d'extrémité (19, 21) s'étendant transversalement à l'axe longitudinal, et comprenant un premier support d'échantillons (37) qui s'étend transversalement à l'axe longitudinal (17) et qui est conçu pour supporter au moins un échantillon (39), de façon que son plan de mesure (41) s'étende perpendiculairement à l'axe longitudinal (17) dans un premier plan d'échantillon (43) et que la portion de surface active (40) soit orientée à l'opposé de la première surface d'extrémité (19), le premier support d'échantillons (37) étant en outre conçu pour supporter plusieurs échantillons (39), de façon que leurs centres aient, parallèlement au premier plan d'échantillon (43), une distance (d) uniforme par rapport à l'axe longitudinal (17), et comprenant un élément agitateur (51) qui est entraîné en rotation dans un plan perpendiculairement à l'axe longitudinal (17) et qui est disposé du côté du premier plan d'échantillon (43) opposé à la première surface d'extrémité (19), le récipient (7) présentant une entrée (25) et une sortie (31), **caractérisé en ce que** l'élément agitateur (51) tourne autour de l'axe longitudinal (17) et est relié à un arbre d'entraînement (53) qui s'étend parallèlement à l'axe longitudinal (17) à travers l'une de la première et de la deuxième surface d'extrémité (19, 21), et l'élément agitateur (51) présentant des ailettes (49) s'étendant radialement à partir de l'arbre d'entraînement (53).

2. Dispositif selon la revendication 1, dans lequel est prévu un deuxième support d'échantillons (45) qui s'étend transversalement à l'axe longitudinal (17) et qui est conçu pour supporter au moins un échantillon (39), de façon que son plan de mesure (41) s'étende perpendiculairement à l'axe longitudinal (17) dans un deuxième plan d'échantillon (47) et que la portion de surface active (40) soit orientée à l'opposé de la deuxième surface d'extrémité (21), et dans lequel l'élément agitateur (51) est disposé entre le premier et le deuxième support d'échantillons (37, 45).

3. Dispositif selon la revendication 2, dans lequel le deuxième support d'échantillons (45) est conçu pour supporter plusieurs échantillons (39), de façon que leurs centres aient, parallèlement au deuxième plan d'échantillon (47), une distance (d) uniforme par rapport à l'axe longitudinal (17).

4. Dispositif selon l'une des revendications 1 à 3, dans lequel l'entrée (25) est prévue dans l'une de la première et de la deuxième surface d'extrémité (19, 21), et la sortie (31) est prévue dans l'autre de la première et de la deuxième surface d'extrémité (19, 21).

5. Dispositif selon la revendication 1, dans lequel les ailettes (49) sont supportées de manière détachable sur l'arbre d'entraînement (53).

6. Dispositif selon la revendication 1 ou 5, dans lequel la première surface d'extrémité (19) est reliée de manière détachable à la paroi latérale (23), dans lequel l'arbre d'entraînement (53) s'étend à travers la deuxième surface d'extrémité (21) et dans lequel le premier support d'échantillons (45) est supporté de manière détachable sur la paroi latérale (23).

7. Dispositif selon les revendications 5 et 6, dans lequel le deuxième support d'échantillons (45) est supporté de manière détachable sur la paroi latérale (23).

8. Dispositif selon l'une des revendications 1 à 7, dans lequel l'entrée ou la sortie (31) est reliée à un dispositif de mesure de débit (35).

9. Dispositif selon l'une des revendications 1 à 8, dans lequel le récipient (7) présente une section transversale circulaire perpendiculairement à l'axe longitudinal (17) et dans lequel les surfaces d'extrémité (19, 21) s'étendent perpendiculairement à l'axe longitudinal (17).
